# EUROPÄISCHE PATENTSCHRIFT

(11) **EP 1 319 602 B1**
(45) Veröffentlichungstag und Bekanntmachung des Hinweises auf die Patenterteilung: **26.01.2005**
(21) Anmeldenummer: 02102709.9
(22) Anmeldetag: 10.12.2002
(51) Int. Cl.: B65D 5/70, B65D 5/56, B32B 1/02, B32B 27/08, B32B 15/08

(54) **Verschlussstreifen**
Closure seal strip
Bande de fermeture

(30) Priorität: 10.12.2001 AT 19292001
(43) Veröffentlichungstag der Anmeldung: 18.06.2003
(73) Patentinhaber: Teich AG, 3200 Weinburg (AT)
(72) Erfinder: Straker, Peter, 3200 Obergrafendorf (AT); Resch, Helmut, 3203 Rabenstein (AT); Richter, Christian, Dr., 3100 St. Pölten (AT); Nekula, Lambert, 3202 Hofstetten (AT); Schedl, Adolf, 3200 Obergrafendorf (AT)
(74) Vertreter: KLIMENT & HENHAPEL

(56) Entgegenhaltungen:
- EP-A- 0 540 923
- EP-A- 1 110 878
- WO-A-00/44632
- US-A- 3 613 986
- US-A- 5 452 849

## Beschreibung

Die vorliegende Erfindung bezieht sich auf eine Verpackung gemäß dem Oberbegriff des Anspruchs 1.

Solche Verpackungen finden beispielsweise als Milchpackungen, Orangensaftpackungen und dergleichen Verwendung.

Bekannte solche Verpackungen sind mit Einwegverschlusselementen versehen. Diese werden werkseitig über die Ausgießöffnung geklebt und sind vom Benutzer vor dem Ausgießen zu entfernen. Nach dem Entfernen werden die Verschlusselemente weggeworfen, da ein weiteres Verschließen mangels Klebefähigkeit der Verschlusselemente nicht möglich ist. Um trotzdem die Ausgießöffnung nicht in geöffnetem Zustand zu belassen, sind bekannte solche Verpackungen mit einem zusätzlichen Hartplastikverschluss versehen (Re-Cap-Systeme), der die Ausgießöffnung umgibt, und über einen Deckelteil verfügt, der auf und zuklappbar ist.

Nachteilig dabei ist jedoch der Umstand, dass der Hartplastikverschluss nicht flüssigkeitsdicht ist. Des weiteren behindert der von der Verpackung nach oben abstehende Deckelteil die Stapelbarkeit und verteuert das gesamte Produkt in der Herstellung unnötig.

Es sind auch Verpackungen mit Verschlusselementen bekannt, die mehrschichtig aufgebaut und wiederverschließbar sind. Aus der US 5,452,849 A ist beispielsweise ein solches Verschlusselement bekannt. Das öffnungsverhalten, sowie die Wiederverschließbarkeit und Dichtheit dieses Verschlusselementes sind jedoch verbesserungswürdig.

Es ist daher die Aufgabe der vorliegenden Erfindung, diesen Nachteil zu verhindern und eine Verpackung samt Verschlusselement vorzusehen, die ein mehrmaliges Öffnen und Verschließen der Ausgießöffnung ermöglicht, wobei gleichzeitig die Stapelbarkeit der Verpackungen gewährleistet bleibt. Es ist ein weiteres Ziel der Erfindung ein Verpackung samt Verschlusselement vorzusehen, die ein geringes Gewicht aufweist und günstig in der Herstellung ist, sowie ein gegenüber bekannten Verpackungen eine verbesserte Öffnung und Wiederverschließbarkeit ermöglicht sowie bessere Dichtheit gewährleistet.

Erfindungsgemäß wird dies durch die kennzeichnenden Merkmale des Anspruchs 1 erreicht.

Die an der Innenseite der Verpackung angeordnete LDPE-Folie ist mit einem Füllmaterial versehen, wodurch eine leichte Einreißbarkeit bzw. Brüchigkeit der Folie gegeben ist, was das erstmalige Öffnen der Ausgießöffnung nach dem Abfüllen erleichtert. Durch die Kombination einer Deckschicht mit einer Haftvermittlerschicht, einer Selbstkleberschicht und einer Heißsiegellackschicht, ist die Wiederverschließbarkeit des Verschlusselementes gewährleistet. Die Haftvermittlerschicht bewirkt das Haften der Selbstkleberschicht an der Deckschicht während des Öffnungsvorgangs, so dass kein Kleber an der Verpackung zurückbleibt. Durch die Selbstkleberschicht ist ein wiederholtes Kleben des mehrschichtigen Verschlusselementes an und Lösen von der Verpackung möglich. Die Heißsiegellackschicht dient zum ersten (gleich nach der Abfüllung stattfindenden) Aufkleben des Verschlusselementes auf die Verpackung über die Ausgießöffnung sowie zur Herstellung der Dichtheit nach dem Abfüllen.

Die Deckschicht kann gemäß den kennzeichnenden Merkmalen des Anspruchs 2 mit einer Polyesterfolienschicht versehen sein. Dies verleiht dem mehrschichtigen Verschlusselement die erforderliche Steifigkeit und gewährleistet, dass auch nach mehrmaligem Öffnen und Verschließen die Form des Verschlusselementes erhalten bleibt. Die Aluminiumfolienschicht gemäß dem kennzeichnenden Merkmal des Anspruchs 2 dient als Barriereschicht für das Füllgut.

Die kennzeichnenden Merkmale des Anspruchs 3 beschreiben einen alternativen Aufbau der Deckschicht des Verschlusselements der Verpackung.

Die kennzeichnenden Merkmale des Anspruchs 4 beschreiben einen weiteren alternativen Aufbau der Deckschicht des Verschlusselements der Verpackung, an welche höhere Anforderungen an die Dichtheit gestellt werden.

Durch die kennzeichnenden Merkmale des Anspruchs 5 kann das Rückstellverhalten des erfindungsgemäßen, mehrschichtigen Verschlusselementes wirksam unterbunden werden.

Das kennzeichnende Merkmal des Anspruchs 6 beschreibt eine bevorzugte Dicke der LDPE-Schicht.

Das kennzeichnende Merkmal des Anspruchs 7 beschreibt einen alternativen Aufbau des erfindungsgemäßen Verschlusselementes für höhere Dichtheitsanforderungen.

Im Anschluss erfolgt nun eine detaillierte Beschreibung der Erfindung. Dabei zeigt
- Fig.1: eine schematische Ansicht des schichtweisen Aufbaus eines erfindungsgemäßen Verschlusselementes samt den die Ausgießöffnung aufweisenden Bereich einer erfindungsgemäßen Verpackung

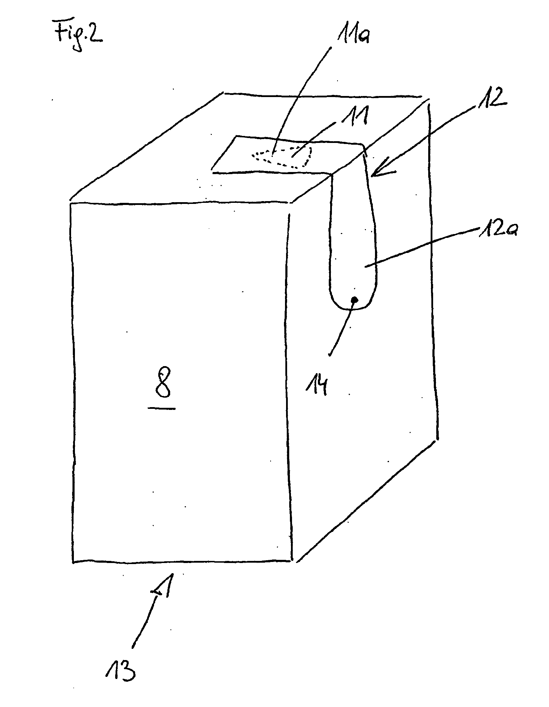

- Fig.2: eine Ansicht einer erfindungsgemäßen Verpackung samt streifenförmigem Verschlusselement
- Fig.3: eine schematische Schnittansicht des die Ausgießöffnung umfassenden Bereichs vor und nach dem Öffnen

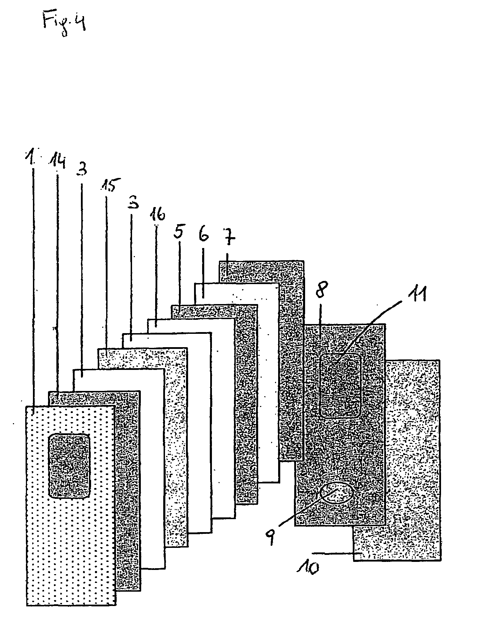

- Fig.4: eine schematische Ansicht eines alternativen Aufbaus eines erfindungsgemäßen Verschlusselements

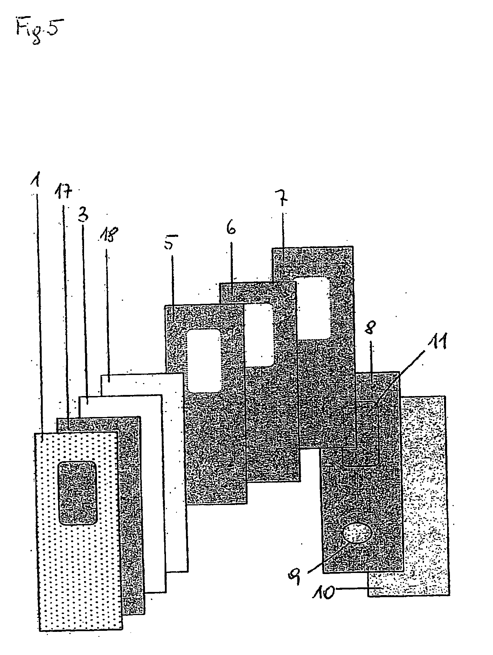

- Fig.5: eine schematische Ansicht eines weiteren alternativen Aufbaus eines erfindungsgemäßen Verschlusselements

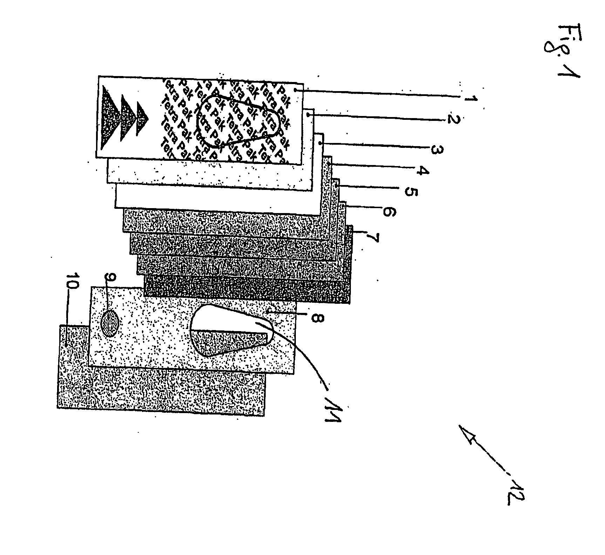

Fig.1 zeigt ganz deutlich den schichtweisen Aufbau des erfindungsgemäßen Verschlusselementes 12. Eine vorzugsweise mit einem Druck 1 bedruckte Polyesterfolienschicht 2 und eine Aluminiumfolienschicht 4 bilden dabei eine Deckschicht.

Alternativ dazu kann die Deckschicht auch aus einer zwischen einer vorzugsweise mit einem Druck 1 bedruckten Aluminiumfolienschicht 14 und einer Polyesterfolienschicht 16 angeordneten Papierschicht 15 gebildet sein, wobei vorzugsweise Papier mit einem spezifischen Gewicht von 30g/m² bis 90 g/m² eingesetzt wird.

Ein weiterer alternativer Aufbau der Deckschicht besteht aus einer vorzugsweise mit einem Druck 1 bedruckten Aluminiumschicht 17, welche auf eine nicht gefüllte LDPE ((Low Density Polyäthylen)-Schicht 18 aufgebracht ist. Eine solcherart aufgebaute Deckschicht zeichnet sich durch extrem hohe Dichtheit und mechanische Stabilität aus.

Die einzelnen Schichten jeder Deckschicht sind jeweils mittels Kaschierkleber 3 miteinander verbunden. Alternativ dazu können sie auch mittels Extrusionsbeschichtung oder Extrusionskaschierung hergestellt werden.

Die Polyesterfolienschicht 2 gibt dem Verschlusselement die erforderliche Steifigkeit und gewährleistet, dass nach mehrmaligem Öffnen und Schließen die Form des Verschlusselementes erhalten bleibt. Falten- bzw. Rillenbildungen, die das Wiederverschließverhalten negativ beeinflussen, werden vermieden. Der Kaschierkleber, vorzugsweise Trockenkaschierkleber 3 bewirkt eine permanente, nicht ohne weiteres lösbare Verbindung der einzelnen Deckschicht-Schichten. Die Aluminiumfolienschicht 4 schützt das Füllgut der Verpackung 13 vor der Umwelt und verringert die Sauerstoffdurchlässigkeit sowie die Wasserdampfdurchlässigkeit des erfindungsgemäßen Verschlusselementes 12.

Die gesamte Deckschicht dient des weiteren als Trägermedium für eine Haftvermittlerschicht (Primer) 5, eine Selbstkleberschicht 6 sowie eine Heißsiegellackschicht 7.

Als Verpackung 13 dient beispielsweise ein aus Karton gefertigter Quader 8 mit einer Ausgießöffnung 11. Die Innenseite der Verpackung 13 ist mit einer LDPE-Folienschicht 10, die mit Füllstoff, beispielsweise Talkum oder Kreide versetzt ist, beschichtet. Die Beschichtung zieht sich auch als dünne Schicht von innen über die Ausgießöffnung 11.

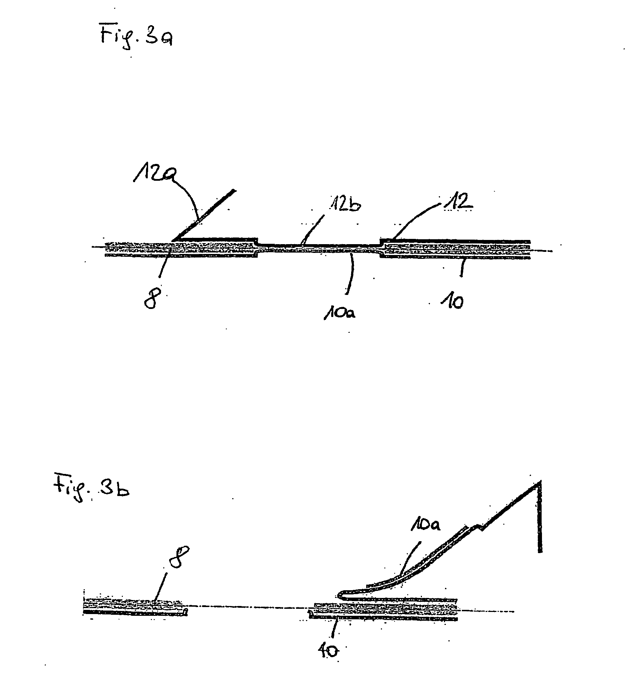

Nach dem Einfüllen des Füllguts in die Verpackung 13 wird die Ausgießöffnung 11 mit einem erfindungsgemäßen Verschlusselement 12, das im vorliegenden Beispiel nicht notwendigerweise streifenförmig ausgebildet ist, unter Wärmeeinwirkung von außen verschlossen. Die am Verschlusselement 12 befindliche Heißsiegellackschicht 7 dient dabei als Siegelmedium und dient zum Aufkleben des Verschlusselementes 12 auf den Verpackungskarton 13. Eine Versiegelung findet sowohl mit dem Verpackungsmaterial statt als auch mit der LDPE-Folienschicht 10 an der Innenseite der Verpackung jedoch lediglich an deren die Ausgießöffnung 11 von innen überziehenden Abschnitt 10a (siehe Fig.3). Ein weiteres Verschlusselement, wie dies bei bekannten solchen Verpackungen der Fall ist, ist nicht erforderlich.

Durch die lediglich geringe Dicke des erfindungsgemäßen Verschlusselementes 12 ist die Stapelbarkeit der Verpackungen nicht beeinträchtigt. Weiters sind die erfindungsgemäßen Verschlusselemente 12 kostengünstig in der Herstellung.

Soll das Füllgut nunmehr durch die Ausgießöffnung 11 ausgeschenkt werden, muß zuerst das Verschlusselement 12 abgezogen werden. Durch die Verbindung der Heißsiegellackschicht 7 mit dem Abschnitt 10a der LDPE-Folienschicht 10 wird diese beim Abziehen des Verschlusselements 12 im Bereich der Ausgießöffnung 11 eingerissen. Der Bereich 10a bleibt somit auf dem Verschlusselement 12 haften und wird mit diesem hochgeklappt, wodurch die Ausgießöffnung 11 freigegeben wird (siehe Fig. 3b).

Die Selbstkleberschicht 6 des Verschlusselementes 12 bewirkt, dass nach dem Ausgießen die Ausgießöffnung 11 wieder verschlossen werden kann, wobei das Verschlusselement 12 durch Anpressen desselben an den die Ausgießöffnung 11 umgebenden Bereich der Verpackung 13 an diesem haften bleibt. Die Haftvermittlerschicht 5 bewirkt dabei, dass die Selbstkleberschicht 6 nahezu vollständig am Verschlusselement 12 haften bleibt und nicht an dem die Ausgießöffnung 11 umgebenden Bereich der Verpackung 13, sodass ausgeschenktes Füllgut nicht mit dem Selbstklebstoff in Berührung kommt. Füllgutrückstande am Verpackungskarton 13 können somit leicht entfernt werden, ohne die Funktionalität der Wiederverschließbarkeit zu beinträchtigen.

Um auch nach mehrmaligem Öffnen und verschließen ein Aufbiegen des Verschlusselementes 12 zu unterbinden kann dieses an seinem Griffbereich 12a über einen Klebepunkt 14 mit der Verpackung 13 lösbar verbunden werden.

Bei höheren Anforderungen an die Dichtigkeit des Verschlusselementes 12 aufgrund von geforderten Lagerzeiten bzw. "agressiven" Füllgütern kann alternativ zum oben beschrieben Aufbau der Deckschicht, diese auch aus mittels Trockenkaschierkleber verbundener vorzugsweise bedruckter Aluminiumfolienschicht und LDPE-Folienschicht aufgebaut sein. In diesem Fall ist jedoch der Bereich der Ausgießöffnung 11 das Verschlusselement 12 nicht mit einer Haftvermittlerschicht 5, einer Selbstkleberschicht 6 und einer Heißsiegellackschicht 7 versehen, der restliche Bereich des Verschlusselementes 12 jedoch schon. Dadurch kommt die LDPE-Folienschicht des Verschlusselementes 12 mit der die Innenfläche der Verpackung auskleidenden LDPE-Folienschicht direkt in Berührung. Diese beiden Schichten werden somit beim Siegelvorgang miteinander verschweisst, wobei beim Abziehen (Öffnen) des Verschlusselmentes 12 die die Innenfläche der Verpackung auskleidende LDPE-Folienschicht einreißt und die Ausgießöffnung freigibt. Da der restliche Bereich des Verschlusselementes 12 den Aufbau Haftvermittlerschicht 5-Selbstkleberschicht 6-Heißsiegellackschicht 7 aufweist, ist die Wiederverschließbarkeit somit gegeben. Bei dieser alternativen Ausführung kann anstelle der gefüllten LDPE-Folienschicht auch eine ungefüllte LDPE-Folienschichten (sowohl am Verschlusselement 12 als auch als Innenauskleidung der Verpackung 13) zum Einsatz kommen, da eine leichte Einreißbarkeit aufgrund des direkten Kontaktes der beiden LDPE-Folienschichten auch ohne Füllstoff gegeben ist.

## Patentansprüche

1. Wiederverschließbare Verpackung (13) für schüttfähige, vorzugsweise flüssige Lebensmittel mit einer Ausgießöffnung (11), welche durch ein mehrschichtiges Verschlusselement (12) verschlossen ist, wobei die Verpackung (13) vorzugsweise aus Karton gefertigt ist und an der Innenseite mit einer LDPE (Low Density Polyäthylen)-Folienschicht (10) beschichtet ist, **dadurch gekennzeichnet, dass** das mehrschichtige Verschlusselement (12) folgende Schichten umfasst:
- eine Deckschicht (1,2,3,4,14,15,16,17,18)
- eine Haftvermittlerschicht (5)
- eine Selbstkleberschicht (6)
- eine Heißsiegellackschicht (7)
und der LDPE-Folienschicht (10) ein Füllstoff, vorzugsweise Talkum oder Kreide zugesetzt ist.

2. Wiederverschließbare Verpackung (13) nach Anspruch 1, **dadurch gekennzeichnet, dass** die Deckschicht (1,2,3,4,14,15,16,17,18) des mehrschichtigen Verschlusselements (12) eine vorzugsweise bedruckte Polyesterfolienschicht (2) sowie eine Aluminiumfolienschicht (4) umfasst.

3. Wiederverschließbare Verpackung (13) nach Anspruch 1 und 2, **dadurch gekennzeichnet, dass** die Deckschicht (1,2,3,4,14,15,16,17,18) des mehrschichtigen Verschlusselements (12) eine Papierschicht (15), vorzugsweise mit einem spezifischen Gewicht von 30g/m² bis 90 g/m², welche zwischen einer vorzugsweise bedruckten Aluminiumfolienschicht (14) und einer Polyesterfolienschicht (16) angeordnet ist, umfasst.

4. Wiederverschließbare Verpackung (13) nach Anspruch 1, **dadurch gekennzeichnet, dass** die Deckschicht (1,2,3,4,14,15,16,17,18) des mehrschichtigen Verschlusselements (12) eine Aluminiumfolienschicht (17) und eine LDPE-Folienschicht umfasst (18).

5. Wiederverschließbare Verpackung (13) nach einem der Ansprüche 1 bis 4, wobei die Verpackung im wesentlichen quaderförmig und das Verschlusselement (12) streifenförmig ausgebildet ist **dadurch gekennzeichnet, dass** das Verschlusselement (12) einen Griffbereich (12a) aufweist, in welchem es über einen Klebepunkt (14) lösbar mit der Verpackung (13) verbunden ist.

6. Wiederverschließbare Verpackung (13) nach einem der Ansprüche 1 bis 5, **dadurch gekennzeichnet, dass** die Dicke der LDPE-Folienschicht (10) zwischen 25 µm und 85 µm liegt.

7. Mehrschichtiges Verschlusselement (12) nach einem der Ansprüche 1 bis 6, **dadurch gekennzeichnet, dass** der die Ausgießöffnung (11) überdeckende Bereich (12b) des Verschlusselementes (12) lediglich aus der Deckschicht besteht.

## Claims

1. A re-sealable packing (13) for pourable, preferably liquid, foodstuffs, comprising a pouring opening (11) which is sealed by a multiple-layer sealing element (12), with the packing (13) preferably being made of cardboard and being coated on the inside with an LDPE (Low Density Polyethylene) film layer (10), **characterized in that** the multiple-layer sealing element (12) comprises the following layers:
- a cover layer (1, 2, 3, 4, 14, 15, 16, 17, 18);
- a primer layer (5);
- a self-adhesive layer (6);
- a hot sealing lacquer layer (7);
and with a filling material, preferably talcum or chalk, being added to the LDPE film layer (10).

2. A re-sealable packing (13) according to claim 1, **characterized in that** the cover layer (1, 2, 3, 4, 14, 15, 16, 17, 18) of the multiple-layer sealing element (12) comprises a preferably printed polyester film layer (2) and an aluminum film layer (4).

3. A re-sealable packing (13) according to claim 1 and 2, **characterized in that** the cover layer (1, 2, 3, 4, 14, 15, 16, 17, 18) of the multiple-layer sealing element (12) comprises a paper layer (15), preferably with a specific weight of 30 g/m² to 90 g/m², which is arranged between a preferably printed aluminum film layer (14) and a polyester film layer (16).

4. A re-sealable packing (13) according to claim 1, **characterized in that** the cover layer (1, 2, 3, 4, 14, 15, 16, 17, 18) of the multiple-layer sealing element (12) comprises an aluminum film layer (17) and an LDPE film layer (18).

5. A re-sealable packing (13) according to one of the claims 1 to 4, with the packing substantially being of cuboid shape and the sealing element (12) being provided with a strip-like arrangement, **characterized in that** the sealing element (12) comprises a handle region (12a) in which it is detachably connected with the packing through a gluing point (14).

6. A re-sealable packing (13) according to one of the claims 1 to 5, **characterized in that** the thickness of the LDPE film layer (10) is between 25 µm and 85 µm.

7. A multiple-layer sealing element (12) according to one of the claims 1 to 6, **characterized in that** the region (12b) of the sealing element (12) covering the pouring opening (11) consists merely of the cover layer.

## Revendications

1. Emballage refermable (13) pour des produits alimentaires pouvant être versés, de préférence liquides, avec une ouverture d'écoulement (11) fermée par un élément de fermeture en plusieurs couches (12), l'emballage (13) étant de préférence en carton et tapissé sur sa face intérieure d'une couche de film de LDPE (polyéthylène à basse densité) (10), **caractérisé en ce que** l'élément de fermeture en plusieurs couches (12) comprend les couches suivantes :
- une couche de couverture (1, 2, 3, 4, 14, 15, 16, 17, 18)
- une couche facilitant l'adhérence (5)
- une couche d'autocollant (6)
- une couche de vernis thermosoudable (7)
et la couche de film de LDPE (10) est additionnée d'une charge, de préférence de talc ou de craie.

2. Emballage refermable (13) selon la revendication 1, **caractérisé en ce que** la couche de couverture (1, 2, 3, 4, 14, 15, 16, 17, 18) de l'élément de fermeture en plusieurs couches (12) comprend une couche de film de polyester (2), de préférence imprimée, ainsi qu'une couche de film d'aluminium (4).

3. Emballage refermable (13) selon les revendications 1 et 2, **caractérisé en ce que** la couche de couverture (1, 2, 3, 4, 14, 15, 16, 17, 18) de l'élément de fermeture en plusieurs couches (12) comprend une couche de papier (15), ayant de préférence un grammage de 30 g/m² à 90g/m², qui est disposée entre une couche de film d'aluminium (14), de préférence imprimée, et une couche de film de polyester (16).

4. Emballage refermable (13) selon la revendication 1, **caractérisé en ce que** la couche de couverture (1, 2, 3, 4, 14, 15, 16, 17, 18) de l'élément de fermeture en plusieurs couches (12) comprend une couche de film d'aluminium (17) et une couche de film de LDPE (18).

5. Emballage refermable (13) selon l'une quelconque des revendications 1 à 4, dans lequel l'emballage est sensiblement de forme quadrangulaire et l'élément de fermeture (12) est en forme de bande, **caractérisé en ce que** l'élément de fermeture (12) possède une zone de préhension (12a) dans laquelle il est relié de manière amovible à l'emballage (13) par un point de colle (14).

6. Emballage refermable (13) selon l'une quelconque des revendications 1 à 5, **caractérisé en ce que** l'épaisseur de la couche de film de LDPE (10) est comprise entre 25 µm et 85 µm.

7. Élément de fermeture en plusieurs couches (12) selon l'une quelconque des revendications 1 à 6, **caractérisé en ce que** la zone (12b) de l'élément de fermeture (12) recouvrant l'ouverture d'écoulement (11) se compose seulement de la couche de couverture.
